# EUROPEAN PATENT APPLICATION

(11) **EP 4 425 914 A1**
(43) Date of publication of application: **04.09.2024**
(21) Application number: 24157518.2
(22) Date of filing: 14.02.2024
(51) Int. Cl.: H04N 7/18, B60R 1/00

(54) **IMAGE PICKUP SYSTEM, VEHICLE, CONTROL METHOD FOR IMAGE PICKUP SYSTEM, AND PROGRAM**

(30) Priority: 02.03.2023 JP 2023032003
(71) Applicant: CANON KABUSHIKI KAISHA, Tokyo 146-8501 (JP)
(72) Inventor: AKIMOTO, Yoshiyuki, Tokyo, 146-8501 (JP)
(74) Representative: TBK

(57) **Abstract**

An image pickup system includes an imaging unit provided to a gate unit, a gate descent detector configured to detect descent of the gate unit, an image clipper configured to clip a part of an image captured by the imaging unit, a memory configured to store an image clipped by the image clipper, and a driving start detector configured to detect driving start. The memory stores an image of an underfloor of a vehicle of a user clipped by the image clipper in a case where the gate descent detector detects the descent of the gate unit. The image clipper outputs the image of the underfloor of the vehicle stored in the memory in a case where the driving start detector detects the driving start.

## Description

### BACKGROUND

### Technical Field

One of the aspects of the embodiments relates to an image pickup system, a vehicle, an image pickup system, a control method, and a storage medium or program.

### Description of Related Art

It is dangerous to start driving if there is an obstacle, an animal, a child, etc. under the floor of the vehicle, so it is necessary to visually inspect the underfloor (space under the vehicle) of the vehicle before a user (or driver) starts driving. This inspection work arduously requires the driver to crouch down and check the underfloor space of the vehicle.

Japanese Patent Laid-Open No. 9-175272 discloses a surveillance camera system for a vehicle that includes a camera for inspecting the underfloor of a vehicle and a monitor for checking an image captured by the camera. Japanese Patent Laid-Open No. 2012-40907 discloses a vehicle surrounding image display apparatus that can inspect the underfloor of a vehicle by changing an imaging direction of a camera configured to image the front of the vehicle.

The surveillance camera system for the vehicle disclosed in Japanese Patent Laid-Open No. 9-175272 includes the camera installed under the floor of the vehicle and dedicated to inspection, so the configuration is complicated and increases costs. Additionally, the camera installed under the floor of a vehicle may get damaged by an obstacle or contaminated by dirt due to mud splashing. Thus, a mechanism needs to accommodate the camera during the non-inspection time of the underfloor of the vehicle, and thus increases costs. The vehicle surrounding image display apparatus disclosed in Japanese Patent Laid-open No. 2012-40907 requires a mechanism for switching the imaging direction of the camera and thus increases costs.

### SUMMARY

The present invention in its first aspect provides an image pickup system as specified in claims 1 to 14.

The present invention in its second aspect provides a vehicle as specified in claim 15.

The present invention in its third aspect provides a method as specified in claims 16 to 19.

The present invention in its fourth aspect provides a program as specified in claim 20.

Further features of various embodiments of the disclosure will become apparent from the following description of embodiments with reference to the attached drawings.

### BRIEF DESCRIPTION OF THE DRAWINGS

FIG. 1 is a block diagram of an image pickup system according to a first embodiment.
FIG. 2 illustrates imaging the rear of a vehicle while a gate unit of the vehicle is stored in the first embodiment.
FIG. 3 illustrates imaging of the underfloor of the vehicle while the gate unit of the vehicle is moved down in the first embodiment.
FIG. 4 illustrates an image clipped by an image clipper and suitable to inspect the underfloor of the vehicle in the first embodiment.
FIG. 5 is a flowchart illustrating a method of controlling the image pickup system according to the first embodiment.
FIG. 6 is a block diagram of an image pickup system according to a second embodiment.
FIG. 7 illustrates imaging of the underfloor of the vehicle while the gate unit of the vehicle in the second embodiment is moved up or down.
FIG. 8 illustrates an image clipped by an image clipper and suitable to inspect the underfloor of the vehicle in the second embodiment.
FIG. 9 illustrates an image clipped by an image clipper and unsuitable to inspect the underfloor of the vehicle in the second embodiment.
FIG. 10 is a flowchart illustrating a method of controlling the image pickup system according to the second embodiment.
FIG. 11 is a block diagram of an image pickup system according to a third embodiment.
FIG. 12 illustrates a captured image on which a detection result by the recognition unit regarding an obstacle and a wheel stopper under the floor of the vehicle is superimposed in the third embodiment.
FIG. 13 is a flowchart illustrating a method of controlling the image pickup system according to the third embodiment.
FIG. 14 is a block diagram of an image pickup system according to a fourth embodiment.
FIG. 15 is a flowchart illustrating a method of controlling the image pickup system according to the fourth embodiment.
FIG. 16 is a block diagram of an image pickup system according to a fifth embodiment.
FIG. 17 is a flowchart illustrating a method of controlling the image pickup system according to the fifth embodiment.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments according to the disclosure. Corresponding elements in respective figures will be designated by the same reference numerals, and a duplicate description thereof will be omitted.

### FIRST EMBODIMENT

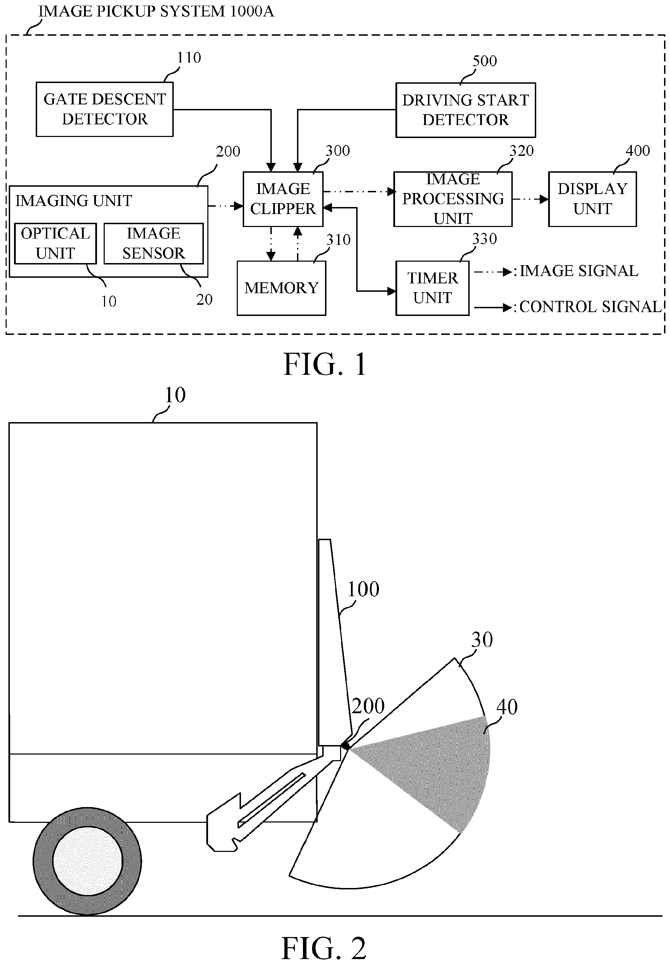

Referring now to FIGs. 1 to 5, a description will be given of a configuration and control method of an image pickup system 1000A according to a first embodiment. FIG. 1 is a block diagram of the image pickup system 1000A. In this embodiment, the image pickup system 1000A images the rear of a vehicle in a case where the gate unit 100 is not moved down, and images the underfloor of the vehicle in a case where the gate unit 100 is moved down, using an imaging unit 200 attached to a gate unit 100 (see FIG. 2) of the vehicle of a user or driver.

The gate unit 100 is a platform (tailgate) that is installed on a cargo vehicle such as a truck, and electrically movable up and down to carry cargo and workers in loading and unloading the cargo. This embodiment assumes that the gate unit 100 has a configuration in which in storing the platform, it is not folded but flipped up to behind the cargo compartment, and this embodiment excludes a configuration in which the platform is folded and stored under the cargo compartment. It does not matter whether the platform is stored outside a cargo compartment gate or whether the platform also serves as the cargo compartment gate.

The image pickup system 1000A includes a gate descent (moving down) detector 110, an imaging unit 200, an image clipper (image cutter) 300, a memory 310, an image processing unit 320, a timer unit 330, a display unit 400, and a driving start detector 500.

The gate descent detector 110 is a detector configured to detect that the gate unit 100 has gone down to the ground, and is, for example, an angle sensor or a position sensor installed on an arm that drives the platform. This embodiment is not limited to this example, and may use another detector such as a push-button switch disposed at part where the platform touches the ground or an infrared sensor. In a case where the gate descent detector 110 detects that the gate unit 100 has gone down, it notifies the image clipper 300 that the gate unit 100 has gone down.

The imaging unit 200 includes an optical unit 10 and an image sensor 20. The optical unit 10 is an optical system (imaging optical system) that images light on the image sensor 20 at a wide angle of view using a combination of a plurality of lenses. The wide angle of view is an angle of view that enables observation of the rear of the vehicle while the gate unit 100 is stored, and inspection of the underfloor of the vehicle while the gate unit 100 is moved down. The image sensor 20 is configured to convert an optical object image formed by the optical unit 10 into an electrical signal and to transmit it to the image clipper 300. The imaging unit 200 is disposed at a lower portion of the gate unit 100 (at a position where it can image the underfloor of the vehicle). The imaging unit 200 changes an imaging direction (orientation of the imaging unit 200) for acquiring an image, using an operation such as moving down the gate unit 100. Therefore, this embodiment does not require a mechanism for changing the orientation of the imaging unit 200.

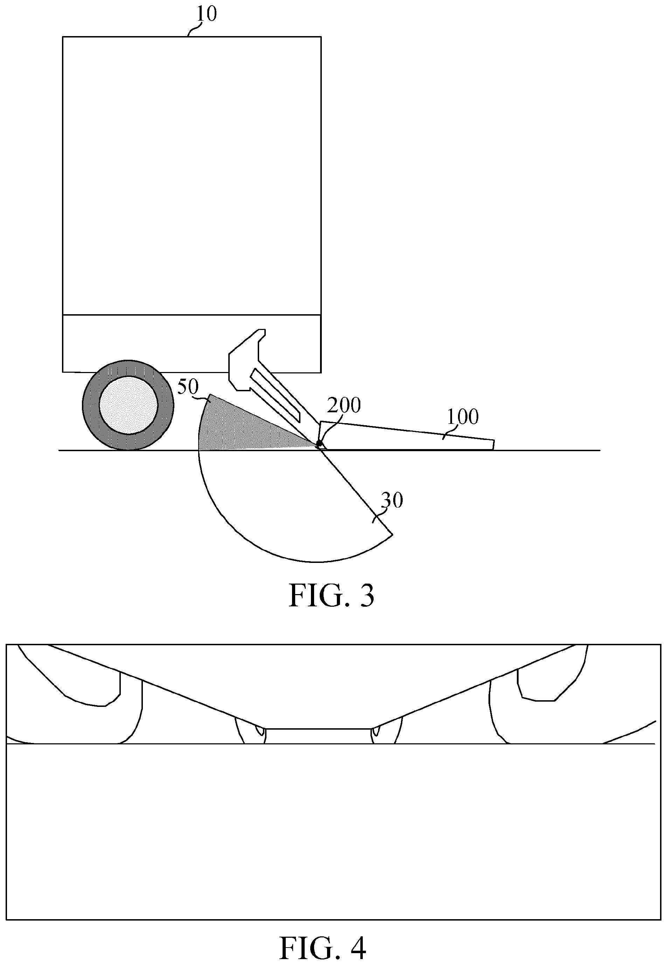

FIG. 2 illustrates imaging of the rear of the vehicle while the gate unit 100 of the vehicle is stored. In FIG. 2, an imaging angle of view 30 is an angle of view that can be imaged by the imaging unit 200, and a rear-of-vehicle angle of view 40 is an angle of view that can observe the rear of the vehicle. FIG. 3 illustrates imaging of the underfloor of the vehicle while the gate unit 100 of the vehicle is moved down. In FIG. 3, an underfloor-of-vehicle angle of view 50 is an angle of view that enables inspection of the underfloor of the vehicle. In this embodiment, the installation position of the imaging unit 200 and each angle of view are merely illustrative, and this embodiment is not limited to these examples.

The image clipper 300 clips a part of an image captured by the imaging unit 200. Image clipping is performed by storing image data captured by the imaging unit 200 in a memory such as a RAM, and reading out only the image data to be clipped. The image clipper 300 transmits the clipped image to the image processing unit 320. In a case where the gate descent detector 110 detects the descent of the gate unit 100, the image clipper 300 changes a clipping position to an image captured at the underfloor-of-vehicle angle of view 50 suitable to inspect the underfloor of the vehicle, and transmits it to the memory 310. At that time, the image clipper 300 notifies the timer unit 330 that the image for underfloor inspection has been captured. Thereafter, in a case where the driving start detector 500 detects the driving start, the image clipper 300 reads out the image for underfloor inspection of the vehicle stored in the memory 310 and transmits it to the image processing unit 320. In addition, in a case where the driving start detector 500 detects the driving start, the image clipper 300 acquires an elapsed time since the image for underfloor inspection was captured from the timer unit 330 (or the elapsed time since the image clipper 300 stored the image in the memory 310). In a case where the elapsed time becomes longer than a predetermined time, the image clipper 300 issues a notification that prompts the driver to again inspect the underfloor of the vehicle (outputs information prompting the driver to inspect the underfloor of the vehicle) using the display unit 400. FIG. 4 illustrates an image clipped by the image clipper 300 that allows inspection under the floor of the vehicle.

The image processing unit 320 performs processing such as Wide Dynamic Range (WDR) correction, gamma correction, LUT processing, and distortion correction for an image transmitted from the image clipper 300. This processing enables an image displayed on the display unit 400 to be easily visually recognized. The image processing unit 320 transmits the processed image to the display unit 400.

The memory 310 is a storage medium that temporarily stores an image clipped by the image clipper 300. The storage medium is, for example, a hard disk drive, a magnetic recording medium such as a magnetic tape, an optical/magnetooptical storage medium, a nonvolatile semiconductor memory, etc., but is not limited to this example. In a case where the driving start detector 500 detects the driving start, the image stored in the memory 310 is read out by the image clipper 300 and transmitted to the image processing unit 320 via the image clipper 300. In the above description, image is transmitted via the image clipper 300, but may be directly transmitted to the image processing unit 320 not through the image clipper 300 if the image has already been clipped.

The timer unit 330 is a measurement unit configured to measure an elapsed time since an image for underfloor inspection was captured. As a use case, a long time may elapse from when the gate unit 100 is moved down to when it starts driving. For example, there is a use case in which the gate unit 100 is used to load cargo at the end of the day (at this time, an image for underfloor inspection of the vehicle is captured), and the driving is started the next morning. During this time, an animal or child may enter under the floor of the vehicle, so in a case where the driving start detector 500 detects the driving start a predetermined time after an image for underfloor inspection was captured, the vehicle needs to prompt a driver to inspect the underfloor. The timer unit 330 is assumed to have a function like Real Time Clock (RTC). The timer unit 330 starts measuring the elapsed time since it received a notification from the image clipper 300 that capturing the image for underfloor inspection was completed. Then, when the image clipper 300 receives the notification that the driving start has been detected, the image clipper 300 reads the elapsed time from the timer unit 330.

The display unit 400 is a display unit such as a liquid crystal display placed in front of the driver's seat of the vehicle, and displays an image processed by the image processing unit 320 to the driver. Additionally, in a case where the predetermined elapsed time has elapsed since an image for underfloor inspection was captured, the display unit 400 provides a notification that prompts the driver to again inspect the underfloor of the vehicle.

The driving start detector 500 is a detector configured to detect that the driver has started driving. The driving start detector 500 notifies the driver according to one of the driving start actions, such as shifting into a driving mode and releasing the handbrake. The notification that the image for underfloor inspection is being displayed may be made through sound, light, etc. as long as the driver is prompted to inspect the underfloor of the vehicle using the image of the underfloor of the vehicle captured by the imaging unit 200 before the driving start. For more reliable underfloor inspection, a function may be provided that prohibits the vehicle from starting driving until the inspection using the image for underfloor inspection by the driver is detected by his button operation or the like.

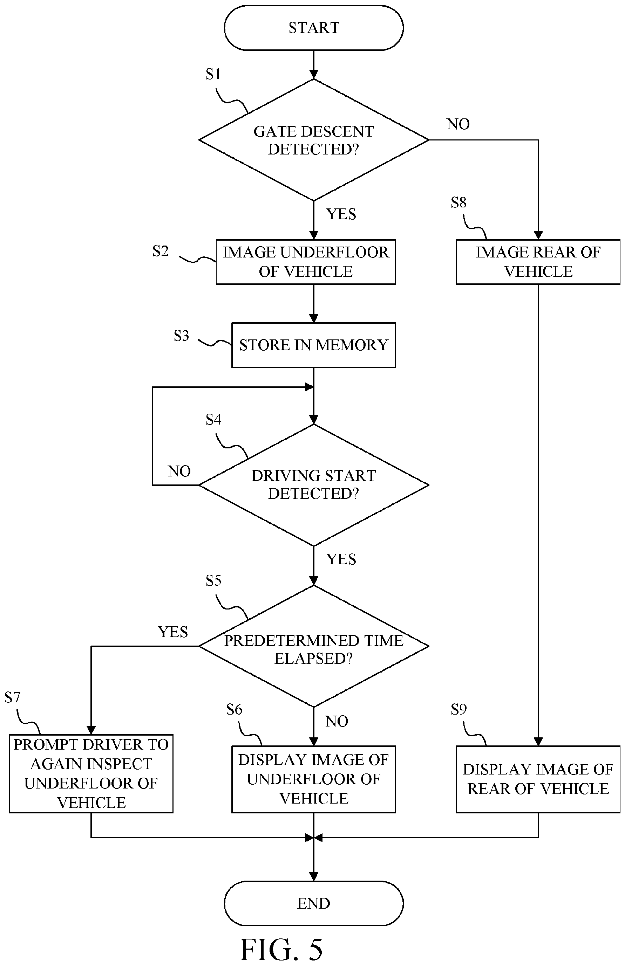

FIG. 5 is a flowchart illustrating a control method for the image pickup system 1000A (imaging processing of the underfloor of a vehicle). First, in step S1, the gate descent detector 110 determines whether or not it has detected that the gate unit 100 of the vehicle has been moved down. In a case where it is determined that the gate descent detector 110 has detected the descent of the gate unit 100, the flow proceeds to step S2. On the other hand, in a case where it is determined that the gate descent detector 110 has not detected the descent of the gate unit 100, the flow proceeds to step S8.

In step S2, the imaging unit 200 images the underfloor of vehicle (of the user or driver). Next, in step S3, the image clipper 300 clips a part of the image of the underside of the vehicle captured by the imaging unit 200, and the memory 310 stores the clipped image. The image clipper 300 also instructs the timer unit 330 to start measuring an elapsed time. Next, in step S4, the driving start detector 500 determines whether the driver has started driving. In a case where it is determined that the driving start detector 500 has detected the driving start, the flow proceeds to step S5. On the other hand, if it is determined that the driving start detector 500 has not detected the driving start, the flow returns to step S4.

In step S5, the image clipper 300 checks the elapsed time since the timer unit 330 captured the image for underfloor inspection, and determines whether the elapsed time is equal to or longer than the predetermined time. In a case where it is determined that the predetermined time or longer has not elapsed since the image clipper 300 captured the image for underfloor inspection, the flow proceeds to step S6. On the other hand, in a case where it is determined that the predetermined time or longer has elapsed since the image clipper 300 captured the image for underfloor inspection, the flow proceeds to step S7.

In step S6, the image processing unit 320 processes the image of the underfloor of the vehicle stored in the memory 310, and the display unit 400 displays the processed image. Thereafter, the processing of the flowchart in FIG. 5 ends. In step S7, the display unit 400 issues a notification that prompts the driver to again inspect the underfloor of the vehicle. Thereafter, the processing of the flowchart in FIG. 5 ends.

In step S8, the imaging unit 200 captures an image of the rear of the vehicle. Next, in step S9, the image processing unit 320 processes the image of the rear of the vehicle captured by the imaging unit 200, and then the display unit 400 displays the processed image. Thereafter, the processing of the flowchart in FIG. 5 ends.

In this embodiment, the image pickup system 1000A images the rear of the vehicle in a case where the gate unit 100 is not moved down, and images the underfloor of the vehicle in a case where the gate unit 100 is moved down, using the imaging unit 200. Therefore, the image pickup system 1000A according to this embodiment can image the underfloor of the vehicle without adding a dedicated camera for imaging the underfloor of the vehicle, and enables the underfloor of the vehicle to be easily and less expensively inspected.

### SECOND EMBODIMENT

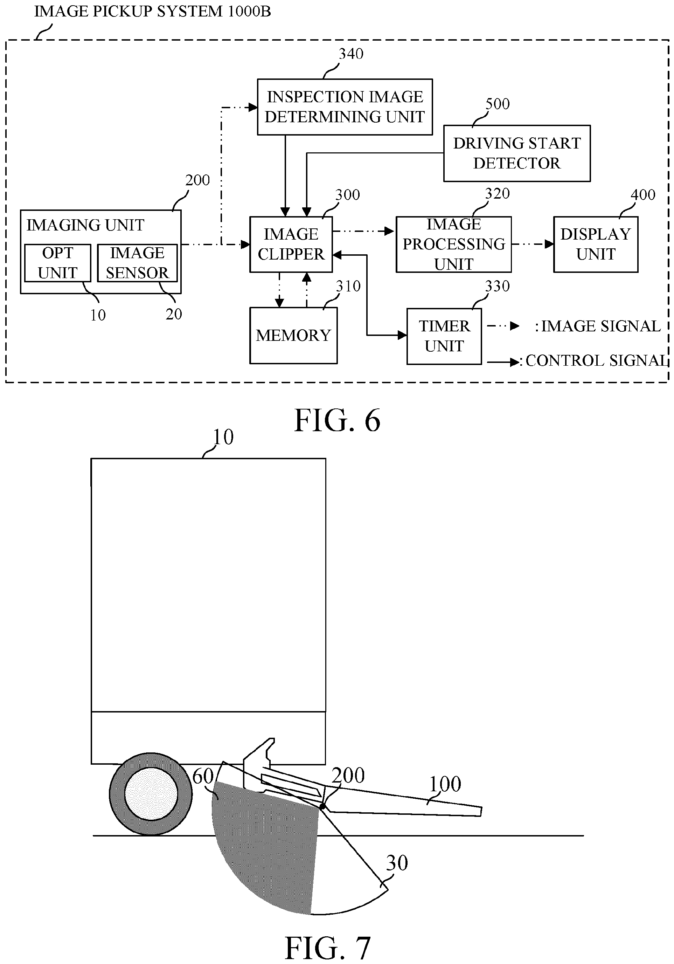

Referring now to FIGs. 6 to 10, a description will be given of an image pickup system 1000B and its control method according to a second embodiment. The image pickup system 1000A according to the first embodiment has described a method for imaging the underfloor of the vehicle in a case where the gate descent detector 110 detects the descent of the gate unit 100. An image when the gate unit 100 is (completely) moved down is not necessarily suitable for an image for underfloor inspection of a vehicle. If there is an image more suitable to inspect the underfloor of the vehicle than the captured image when the gate unit 100 is completely moved down, inspection using that image can contribute to more reliable safety. A method will be described in which the image pickup system 1000B according to this embodiment analyzes an image captured by the imaging unit 200 and determines an image suitable to inspect the underfloor of the vehicle.

FIG. 6 is a block diagram of the image pickup system 1000B. The image pickup system 1000B includes an imaging unit 200, an inspection image determining unit 340, an image clipper 300, a memory 310, an image processing unit 320, a timer unit 330, a display unit 400, and a driving start detector 500. That is, the image pickup system 1000B is different from the image pickup system 1000A according to the first embodiment in that it includes an inspection image determining unit 340 instead of the gate descent detector 110. In this embodiment, differences from the first embodiment will be mainly described.

The imaging unit 200 includes an optical unit 10 and an image sensor 20. The optical unit 10 is an optical system configured to image light on the image sensor 20 at a wide angle of view using a combination of a plurality of lenses. A wide angle of view is an angle of view that enables observation of the rear of the vehicle while the gate unit 100 is stored, and inspection of the underfloor of the vehicle while the gate unit 100 is moved down. The image sensor 20 is configured to convert an optical object image formed by the optical unit 10 into an electrical signal and to transmit it to the image clipper 300 and the inspection image determining unit 340. The imaging unit 200 is disposed at a lower portion of the gate unit 100 (at a position where it can image the underfloor of the vehicle). The imaging unit 200 changes an imaging direction (orientation of the imaging unit 200) for acquiring an image, using an operation such as moving down the gate unit 100. Therefore, this embodiment does not require a mechanism for changing the orientation of the imaging unit 200.

FIG. 7 illustrates imaging of the underfloor of the vehicle while the gate unit 100 of the vehicle is being moved up or down. An underfloor-of-vehicle optimum angle of view 60 is an angle of view suitable to inspect the underfloor of the vehicle. In FIG. 7, the installation position of the imaging unit 200 and each angle of view are merely illustrative, and this embodiment is not limited to these examples.

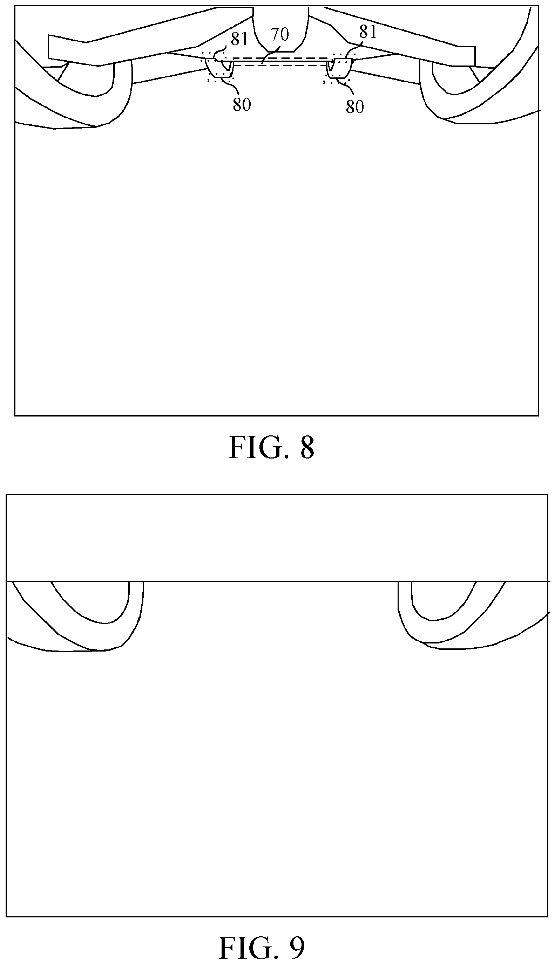

FIG. 8 illustrates an image suitable to inspect the underfloor of the vehicle clipped by the image clipper 300. The inspection image determining unit 340 analyzes the image captured by the imaging unit 200, determines an image suitable to inspect the underfloor of the vehicle (of the user or driver), and notifies the image clipper 300 of the determined image. An illustrative method of determining an image suitable to inspect the underfloor of the vehicle includes an angle of view that enables a bumper's lower portion (front bumper portion) 70 at the front of the vehicle to be imaged, because the entire view under the floor of the vehicle may be imaged. An angle of view in which grounded surfaces 80 of the front wheels of the vehicle and underfloor portions 81 at the rear of the front wheels are imaged may be determined as an image suitable to inspect the underfloor of the vehicle. Alternatively, an image suitable to inspect the underfloor of a vehicle may be determined by considering the characteristics of the optical unit 10, such as an angle of view for imaging with higher resolution and an angle of view for imaging with less distortion.

The image clipper 300 clips a part of the image captured by the imaging unit 200. Image clipping is performed by storing image data captured by the imaging unit 200 in a memory such as a RAM, and reading out only the image data to be clipped. The image clipper 300 transmits the clipped image to the image processing unit 320. In a case where the inspection image determining unit 340 is notified that the image is suitable to inspect the underfloor of the vehicle, the image clipper 300 clips the image captured at the underfloor-of-vehicle optimum angle of view 60. The memory 310 stores the clipped image. In addition, in a case where the driving start detector 500 detects the driving start, the image clipper 300 acquires an elapsed time since the image for underfloor inspection was captured from the timer unit 330. In a case where the image clipper 300 determines that the elapsed time is longer than the predetermined time, the image clipper 300 issues a notification that prompts the driver to again inspect the underfloor of the vehicle using the display unit 400.

As illustrated in FIG. 8, an image suitable to inspect the underfloor of a vehicle has an angle of view that can image the bumper's lower portion 70 at the front of the vehicle, or an angle of view that can image the grounded surfaces 80 at the front wheels and the underfloor portions 81 at the rear of the front wheels of the vehicle. FIG. 9 illustrates an image clipped by the image clipper 300 and unsuitable for underfloor inspection of a vehicle. As illustrated in FIG. 9, the angle of view does not image the bumper's lower portion 70 at the front of the vehicle, and the angle of view does not image the grounded surfaces 80 of the front wheels of the vehicle or the underfloor portions 81 at the rear of the front wheels. Thus, this image is not suitable for underfloor inspection.

The configuration of the image pickup system 1000B according to this embodiment is the same as that of FIG. 1 except for the imaging unit 200, the inspection image determining unit 340, and the image clipper 300, and a description thereof will be omitted.

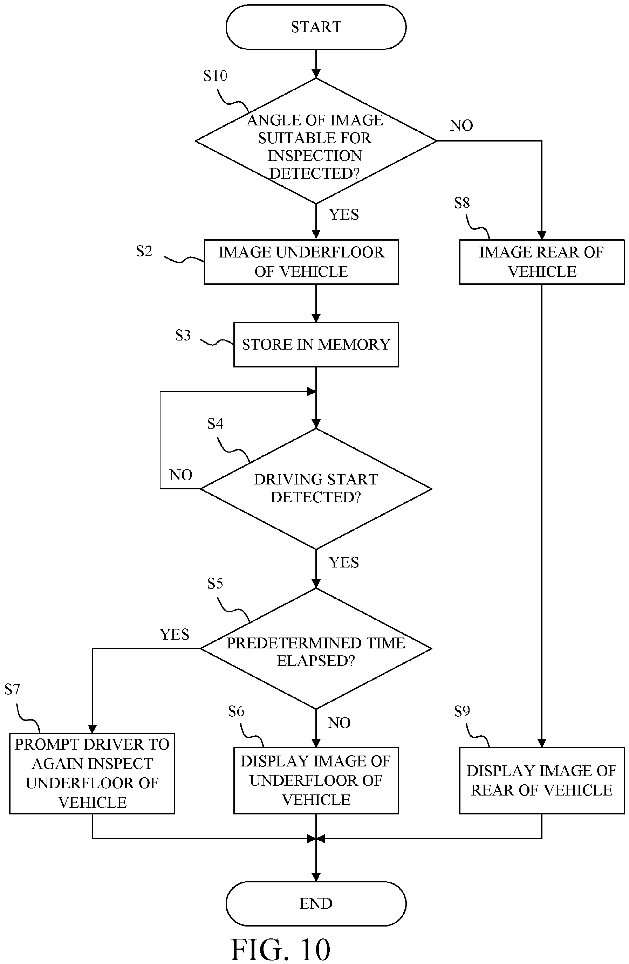

FIG. 10 is a flowchart illustrating a method for controlling the image pickup system 1000B (imaging processing of the underfloor of the vehicle). FIG. 10 is different from FIG. 5 in having step S10 instead of step S1. Hereinafter, differences between FIG. 10 and FIG. 5 will be explained.

First, in step S10, the inspection image determining unit 340 determines whether the image captured by the imaging unit 200 is suitable for inspection. In a case where the inspection image determining unit 340 determines that the image captured by the imaging unit 200 is suitable for inspection, the flow proceeds to step S2. On the other hand, in a case where the inspection image determining unit 340 determines that the image captured by the imaging unit 200 is not suitable for inspection, the flow proceeds to step S6. The steps other than step S10 are the same as those in FIG. 5, and thus a description thereof will be omitted.

This embodiment can analyze the image captured by the imaging unit 200 in the image pickup system 1000B and determine the image suitable to inspect the underfloor of the vehicle. Therefore, the image pickup system 1000B according to this embodiment can contribute to more reliable safety through the inspection using an image more suitable to inspect the underfloor of the vehicle.

### THIRD EMBODIMENT

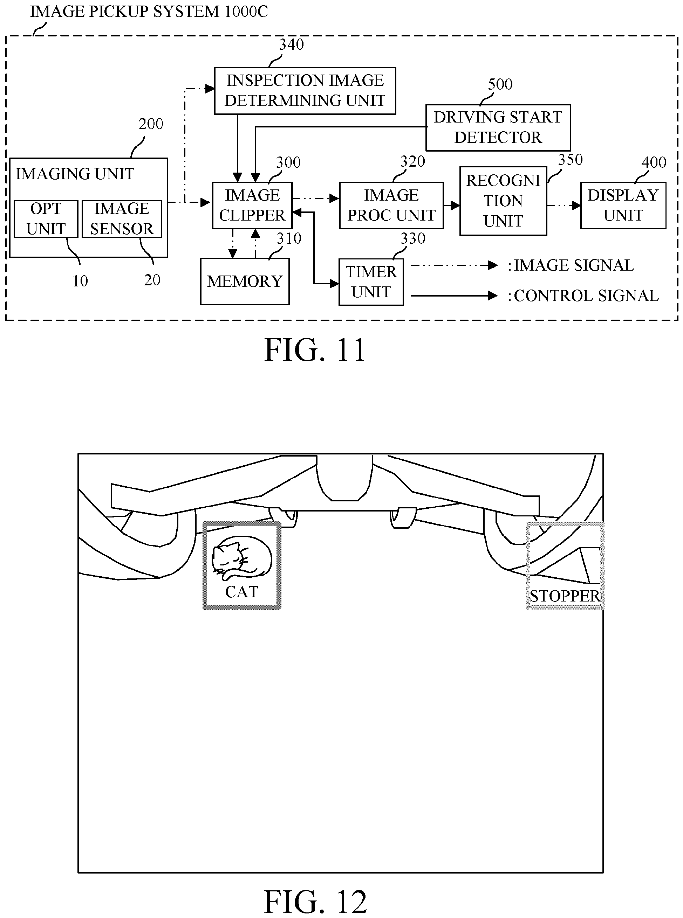

Referring now to FIGs. 11 to 13, a description will be given of an image pickup system 1000C and its control method according to a third embodiment. In the first and second embodiments, an image for underfloor inspection of a vehicle is displayed on the display unit 400 and the driver determines that it is safe. The third embodiment will discuss a method in which the image pickup system 1000C mechanically detects an obstacle under the floor of the vehicle from an image captured by the imaging unit 200 and notifies the driver of the result. More specifically, this embodiment provides a recognition unit 350 configured to recognize the image of the underside of the vehicle captured by the imaging unit 200 and mechanically detect any obstacles under the floor of the vehicle, thereby contributing to more reliable safety.

FIG. 11 is a block diagram of the image pickup system 1000C. The image pickup system 1000C includes an imaging unit 200, an inspection image determining unit 340, an image clipper 300, a memory 310, an image processing unit 320, a timer unit 330, a recognition unit 350, a display unit 400, and a driving start detector 500. The image pickup system 1000C adds the recognition unit 350 to the image pickup system 1000B illustrated in FIG. 6. Hereinafter, the differences between this embodiment and the second embodiment will be mainly explained.

The recognition unit 350 detects an obstacle under the floor of the vehicle using a trained model for recognizing an obstacle under the floor of the vehicle, which is obtained by learning the learning data including any obstacles under the floor of the vehicle, and the image processed by the image processing unit 320. The detection result of the recognition unit 350 is superimposed on the captured image and transmitted to the display unit 400. One illustrative superimposing method emphasizes a detected obstacle by enclosing it with a colored frame. A target vehicle that is a large cargo vehicle such as a truck needs a wheel stopper attached to the wheel while the vehicle is stopped.

The recognition unit 350 may detect that a wheel stopper is attached to the wheel using the trained model for recognizing the wheel stopper attached to the wheels, which is obtained by learning the learning data including the wheel stopper attached to the wheel and the image processed by the image processing unit 320. The result detected by the recognition unit 350 is superimposed on the captured image and transmitted to the display unit 400. One illustrative superimposing method emphasizes a detected wheel stopper by enclosing it with a colored frame. In this case, a detected obstacle and a wheel stopper may be distinguished and emphasized by using different colored frames, etc.

FIG. 12 illustrates a captured image on which a detection result by the recognition unit 350 regarding an obstacle (cat) and a wheel stopper under the floor of the vehicle is superimposed. In this embodiment, the recognition unit 350 and the inspection image determining unit 340 are separately described, but the recognition unit 350 may also serve as the function of the inspection image determining unit 340.

The display unit 400 is a display unit such as a liquid crystal display, and displays the recognition result of the recognition unit 350 superimposed on the image processed by the image processing unit 320 to the driver. The display unit 400 may notify the driver with a voice as well as an image in a case where the recognition unit 350 detects an obstacle. Alternatively, the presence or absence of an obstacle may be notified to the driver by using simple notification means, such as lighting a lamp and sound alone. In this embodiment, the inspection image determining unit 340 determines the image for underfloor inspection, but in a case where the gate descent detector 110 detects the descent of the gate unit 100 as in the first embodiment, the image for underfloor inspection may be determined. The configuration of the image pickup system 1000C other than the recognition unit 350 and display unit 400 is the same as that in FIG. 6, and therefore a description thereof will be omitted.

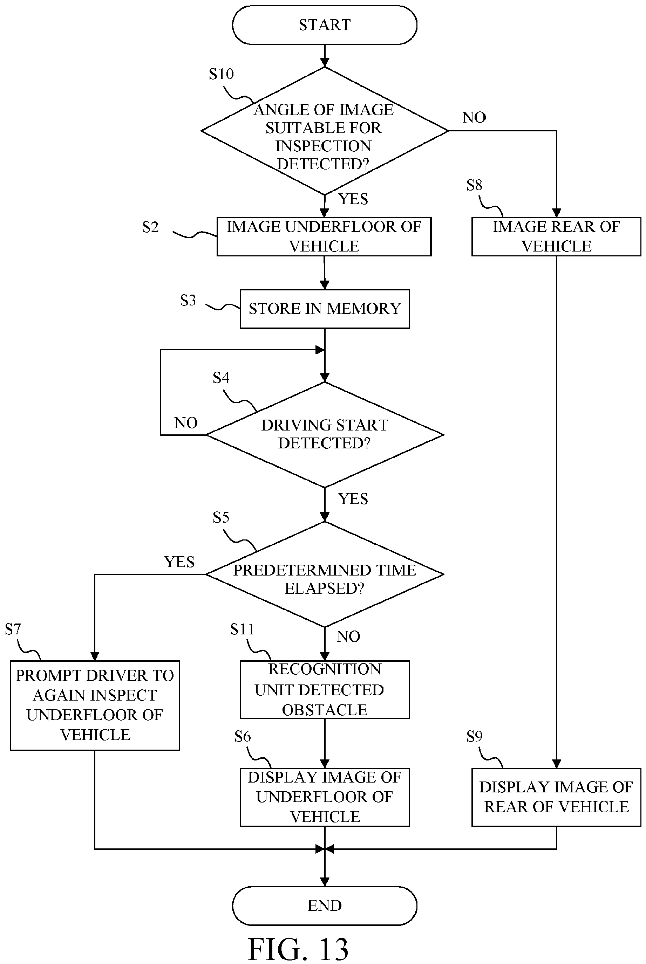

FIG. 13 is a flowchart illustrating a control method (imaging processing of the underfloor of the vehicle) by the image pickup system 1000C. FIG. 13 is different from FIG. 10 in having step S 11. Hereinafter, the differences between FIG. 13 and FIG. 10 will be explained.

In step S11, the recognition unit 350 recognizes (determines) whether or not there are any obstacles in the image processed by the image processing unit 320, and in a case where it is determined that there is an obstacle, the recognition result (information about position and size of the obstacle, etc.) is superimposed on the image. Thereafter, the flow proceeds to step S5. The steps other than step S11 are the same as those in FIG. 10, and a description thereof will be omitted.

In this embodiment, the image pickup system 1000C mechanically detects an obstacle under the floor of the vehicle from the image captured by the imaging unit 200, and notifies the driver of the result. Therefore, this embodiment can contribute to more reliable safety by mechanically detecting an obstacle under the floor of the vehicle based on the image of the underfloor of the vehicle captured by the imaging unit 200.

### FOURTH EMBODIMENT

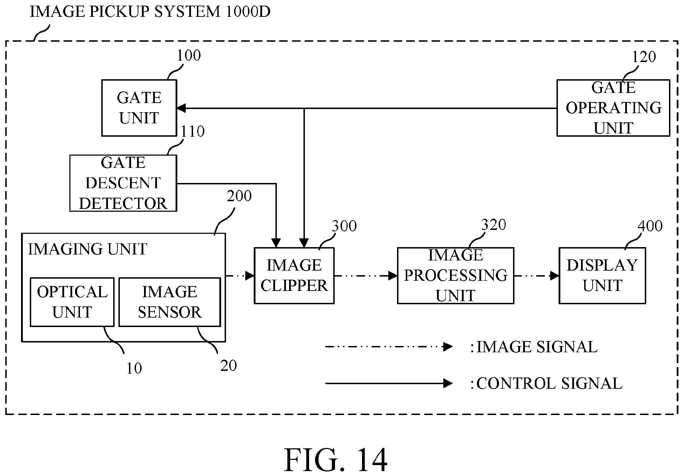

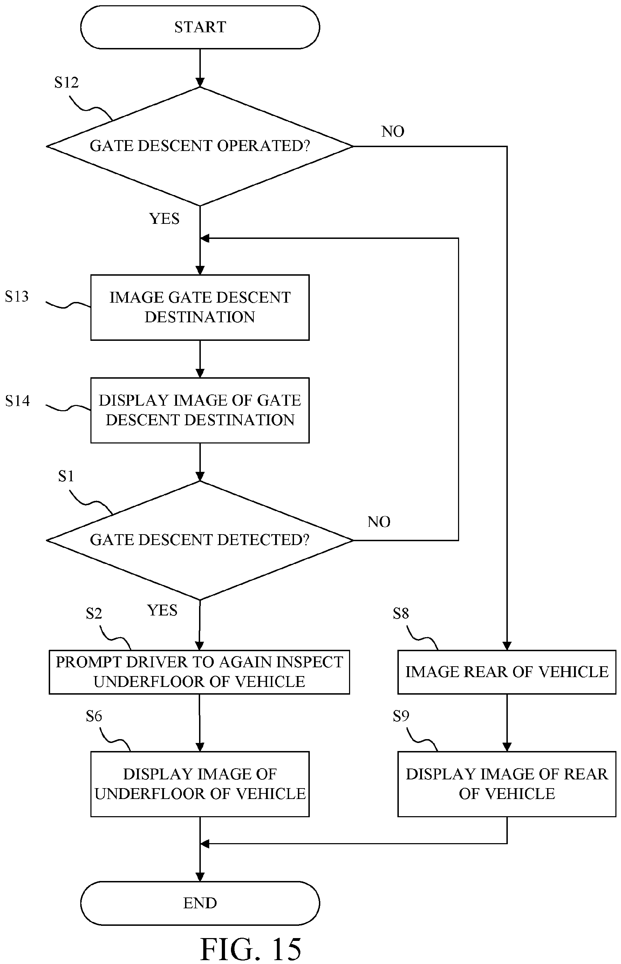

Referring now to FIGs. 14 and 15, a description will be given of an image pickup system 1000D and its control method according to a fourth embodiment. In the first to third embodiments, an image for underfloor inspection of a vehicle stored in the memory 310 is displayed on the display unit 400 in a case where the driving start detector 500 detects the driving start, and the inspection is performed. The driver can check the image for underfloor inspection of the vehicle in real time and this configuration can contribute to more reliable safety. On the other hand, this embodiment will discuss a method in which the driver can check the image of the underfloor of the vehicle in real time and inspect the underfloor of the vehicle by operating the gate unit 100 from the driver's seat using the image pickup system 1000D.

FIG. 14 is a block diagram of the image pickup system 1000D. The image pickup system 1000D includes a gate unit 100, a gate descent detector 110, a gate operating unit 120, an imaging unit 200, an image clipper 300, an image processing unit 320, and a display unit 400. The image pickup system 1000D is the same as the image pickup system 1000A in FIG. 1 except that the memory 310, the timer unit 330, and the driving start detector 500 are removed, and the gate unit 100 and the gate operating unit 120 are added. Hereinafter, the differences between this embodiment and the first embodiment will be mainly described.

The imaging unit 200 includes an optical unit 10 and an image sensor 20. The optical unit 10 is an optical system (imaging optical system) that images light on the image sensor at a wide angle of view using a combination of a plurality of lenses. The wide angle of view is an angle of view that enables observation of the rear of the vehicle and the descent destination of the gate unit 100 while the gate unit 100 is stored, and inspection of the underfloor of the vehicle while the gate unit 100 is moved down. The image sensor 20 is configured to convert an optical object image formed by the optical unit 10 into an electrical signal and to transmit it to the image clipper 300. The imaging unit 200 is disposed at a lower portion of the gate unit 100 (at a position where it can image the underfloor of the vehicle). The imaging unit 200 changes an imaging direction (orientation of the imaging unit 200) for acquiring an image, using an operation such as moving down the gate unit 100. Therefore, this embodiment does not require a mechanism for changing the orientation of the imaging unit 200.

The gate operating unit 120 is an operation unit configured to operate the raising and descending of the gate unit 100 placed in the driver's seat. When a worker such as a driver operates the gate operating unit 120, a control signal is transmitted to the gate unit 100, and the gate unit 100 starts moving up or down. In the case of a single worker, he operates the gate operating unit 120 from the driver's seat, and is hard to confirm the safety of the destination where the gate unit 100 is moved down. For this reason, the gate operating unit 120 notifies the image clipper 300 that the gate unit 100 has started going down, and an image clipping position is changed to the descent destination of the gate unit 100.

In a case where the image clipper 300 receives a notification from the gate operating unit 120 that the gate unit 100 starts going down, it clips an image captured by the imaging unit 200 at an angle of view that enables the descent destination of the gate unit 100 to be imaged. The clipped image is processed by the image processing unit 320 and then displayed on the display unit 400. The driver determines whether the descending of the gate unit 100 can be safely continued based on the captured image of the descent destination of the gate unit 100 displayed on the display unit 400. In a case where the driver determines that the descending of the gate unit 100 can be safely continued, the driver continues to move down the gate unit 100 using the gate operating unit 120. On the other hand, in a case where the driver determines that the descending of the gate unit 100 cannot be safely continued, the gate operating unit 120 stops moving down the gate unit 100.

In order to prompt the driver to confirm whether the gate unit 100 can safely go down, the driver may be notified using light or sound in displaying the image of the descent destination of the gate unit 100 on the display unit 400. In this embodiment, the configuration of the image pickup system 1000D other than the imaging unit 200, the gate operating unit 120, and the image clipper 300 is the same as that of the first embodiment, and thus a description thereof will be omitted.

FIG. 15 is a flowchart illustrating a control method for the image pickup system 1000D (processing of moving down the gate unit 100 using the gate operating unit 120 and imaging of the underfloor of the vehicle). Steps S2, S6, S8, and S9 in FIG. 15 are the same as those in the flowchart in FIG. 5, and a description thereof will be omitted.

First, in step S12, the image clipper 300 determines whether the gate operating unit 120 has been operated to move down the gate unit 100. In a case where the image clipper 300 determines that the gate unit 100 has been moved down, the flow proceeds to step S13. On the other hand, in a case where the image clipper 300 determines that the gate unit 100 has not been moved down, the flow proceeds to step S8.

In step S13, the image clipper 300 clips an image that has the descent destination of the gate unit 100. Next, in step S14, the image processing unit 320 processes the image clipped by the image clipper 300 and having the descent destination of the gate unit 100, and displays the processed image on the display unit 400. In a case where the driver checks the image having the descent destination of the gate unit 100, and determines that the gate unit 100 can be safely moved down, the driver continues moving down the gate unit 100 and the flow proceeds to step S1.

In step S1, the gate descent detector 110 determines whether or not the descent of the gate unit 100 is detected. In a case where it is determined that the gate descent detector 110 has detected the descent of the gate unit 100, the flow proceeds to step S2. On the other hand, in a case where it is determined that the gate descent detector 110 has not detected the descent of the gate unit 100, the flow returns to step S13.

The image pickup system 1000D according to this embodiment enables the driver to check the image under the floor of the vehicle in real time by operating the gate unit 100 from the driver's seat, and performs the inspection of the underfloor of the vehicle. Thereby, this embodiment can contribute to more reliable safety because the driver can check the image for underfloor inspection of the vehicle in real time.

### FIFTH EMBODIMENT

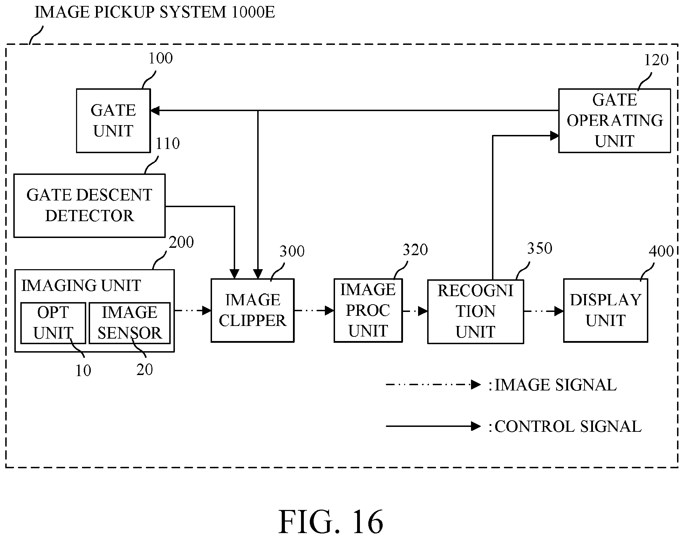

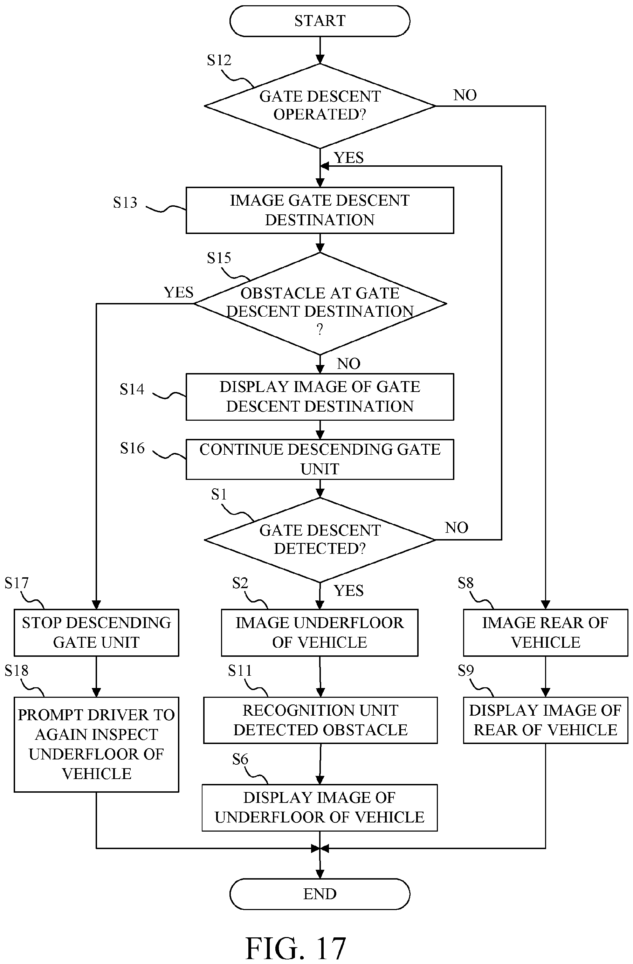

Referring now to FIGs. 16 and 17, a description will be given of an image pickup system 1000E and its control method according to the fifth embodiment. In the fourth embodiment, the driver determines whether the descending of the gate unit 100 can be safely continued and whether there is an obstacle under the floor of the vehicle. On the other hand, the recognition unit 350 can mechanically detect the descent destination of the gate unit 100 and any obstacles under the floor of the vehicle from the image captured by the imaging unit 200, and this configuration can contribute to more reliable safety. This embodiment will discuss a method in which the recognition unit 350 mechanically detects the descent destination of the gate unit 100 and any obstacles under the floor of the vehicle from the image captured by the imaging unit 200 in the image pickup system 1000E, and notifies the driver of the result.

FIG. 16 is a block diagram of the image pickup system 1000E. The image pickup system 1000E includes a gate unit 100, a gate descent detector 110, a gate operating unit 120, an imaging unit 200, an image clipper 300, an image processing unit 320, a recognition unit 350, and a display unit 400. The image pickup system 1000E corresponds to the image pickup system 1000D illustrated in FIG. 14 that includes the recognition unit 350. Hereinafter, the differences between this embodiment and the fourth embodiment will be mainly described.

The recognition unit 350 detects an obstacle at the descent destination of the gate unit 100 or under the floor of the vehicle using a trained model for recognizing an obstacle at the descent destination of the gate unit 100 or under the floor of the vehicle, which is obtained by learning the learning data including any obstacles, and the image processed by the image processing unit 320. The detection result by the recognition unit 350 is superimposed on the captured image and transmitted to the display unit 400. One illustrative superimposing method emphasizes a detected obstacle by enclosing it with a colored frame. In a case where the recognition unit 350 detects an obstacle at the descent destination of the gate unit 100, the gate operating unit 120 is controlled to stop the descent and the display unit 400 notifies the driver to again inspect the descent destination of the gate unit 100.

In a case where the imaging unit 200 is a camera that can measure a distance such as a stereo camera, the recognition unit 350 recognizes the unevenness at the descent destination of the gate unit 100 using the data obtained by the imaging unit 200 that has measured the distance to the descent destination of the gate unit 100. Then, whether the gate unit 100 can be safely moved down may be determined. A target vehicle that is a large cargo vehicle such as a truck needs a wheel stopper attached to the wheel while the vehicle is stopped, and the wheel stopper must be removed before the vehicle is driven. The recognition unit 350 may detect the wheel stopper attached to the wheel using a trained model for recognizing the wheel stopper attached to the wheel, which is obtained by learning the learning data including the wheel stopper attached to the wheel, and the image processed by the image processing unit 320. The detection result by the recognition unit 350 is superimposed on the captured image and transmitted to the display unit 400. One illustrative superimposing method emphasizes a detected wheel stop by enclosing it with a colored frame. In this case, a detected obstacle and a wheel stopper may be distinguished and emphasized by using different colored frames, etc.

The display unit 400 is a display unit such as a liquid crystal display, and displays the recognition result of the recognition unit 350 superimposed on the image processed by the memory 310 to the driver. In a case where the recognition unit 350 detects an obstacle, the display unit 400 may notify the driver of whether or not the obstacle has been detected, for example, by a simple means such as lighting a lamp and a voice.

In this embodiment, the gate descent detector 110 detects that the gate unit 100 has gone down and an image for underfloor inspection is captured, but as in the third embodiment, the inspection image determining unit 340 may determine an image for underfloor inspection. The configuration of the image pickup system 1000E other than the recognition unit 350 and the display unit 400 is the same as that in FIG. 1, and thus a description thereof will be omitted.

FIG. 17 is a flowchart illustrating a control method for the image pickup system 1000E (processing of moving down the gate unit 100 using the gate operating unit 120 and imaging the underfloor of the vehicle). FIG. 17 corresponds to FIG. 15 to which steps S11 and S15 to S 18 are added. Hereinafter, the differences between FIG. 17 and FIG. 15 will be mainly explained. Step S11 is the same as that in FIG. 13, so a description thereof will be omitted.

In step S15, the recognition unit 350 detects (determines) whether or not there is an obstacle based on the image of the descent destination of the gate unit 100 clipped by the image clipper 300. In a case where the recognition unit 350 determines that there is no obstacle at the descent destination of the gate unit 100, the flow proceeds to step S14. On the other hand, in a case where the recognition unit 350 determines that there is an obstacle at the descent destination of the gate unit 100, the flow proceeds to step S17.

In step S16, since the recognition unit 350 determines in step S15 that there is no obstacle at the descent destination of the gate unit 100, the gate operating unit 120 continues to move down the gate unit 100.

In step S17, the image pickup system 1000E controls the gate operating unit 120 to stop moving down the gate unit 100. Next, in step S18, the display unit 400 displays (notifies) the driver to again inspect the descent destination of the gate unit 100. Thereafter, the flow of FIG. 17 ends.

In the image pickup system 1000E according to this embodiment, the recognition unit 350 mechanically detects the descent destination of the gate unit 100 and an obstacle under the floor of the vehicle from the image captured by the imaging unit 200, and notifies the driver of the result. Thereby, the recognition unit 350 mechanically detects the descent destination of the gate unit 100 and an obstacle under the floor of the vehicle, and this embodiment contributes to more reliable safety.

Each embodiment can provide an image pickup system that images the rear of a vehicle and the underfloor of the vehicle, using an image pickup apparatus installed to the gate unit. Therefore, each embodiment can provide an image pickup system, a vehicle, a control method for the image pickup system, and a storage medium or a program that can image the rear of a vehicle and the underfloor of the vehicle with a simple configuration.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a readonly memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that some embodiments are not limited to the disclosed embodiments. The scope of the following claims is to be accorded the broadest interpretation so as to encompass all such modifications and equivalent structures and functions.

Each embodiment can provide an image pickup system that can image the rear of a vehicle and the underfloor of the vehicle with a simple configuration.

An image pickup system includes an imaging unit provided to a gate unit, a gate descent detector configured to detect descent of the gate unit, an image clipper configured to clip a part of an image captured by the imaging unit, a memory configured to store an image clipped by the image clipper, and a driving start detector configured to detect driving start. The memory stores an image of an underfloor of a vehicle of a user clipped by the image clipper in a case where the gate descent detector detects the descent of the gate unit. The image clipper outputs the image of the underfloor of the vehicle stored in the memory in a case where the driving start detector detects the driving start.

## Claims

1. An image pickup system (1000A) comprising:
an imaging unit (200) provided to a gate unit (100);
a gate descent detector (110) configured to detect descent of the gate unit;
an image clipper (300) configured to clip a part of an image captured by the imaging unit;
a memory (310) configured to store an image clipped by the image clipper; and
a driving start detector (500) configured to detect driving start,
**characterized in that** the memory stores an image of an underfloor of a vehicle of a user clipped by the image clipper in a case where the gate descent detector detects the descent of the gate unit,
wherein the image clipper outputs the image of the underfloor of the vehicle stored in the memory in a case where the driving start detector detects the driving start.

2. An image pickup system (1000B, 1000C) comprising:
an imaging unit (200) provided to a gate unit (100);
an inspection image determining unit (340) configured to determine an image suitable to inspect an underfloor of a vehicle of a user from images captured by the imaging unit;
an image clipper (300) configured to clip a part of an image captured by the imaging unit;
a memory (310) configured to store the image clipped by the image clipper; and
a driving start detector (500) configured to detect driving start,
**characterized in that** the memory stores the image of the underfloor of the vehicle clipped by the image clipper in a case where the inspection image determining unit determines the image suitable to inspect the underfloor of the vehicle,
wherein the image clipper outputs the image of the underfloor of the vehicle stored in the memory in a case where the driving start detector detects the driving start.

3. The image pickup system according to claim 1 or 2, further comprising a recognition unit (350) configured to recognize an obstacle based on the image of the underfloor of the vehicle captured by the imaging unit,
**characterized in that** the recognition unit outputs information about the obstacle superimposed on the image of the underfloor of the vehicle.

4. The image pickup system according to any one of claims 1 to 3, further comprising a measurement unit (330) configured to measure an elapsed time since the image clipper stored the image of the underfloor of the vehicle in the memory or since the imaging unit captured the image,
**characterized in that** in a case where the elapsed time is longer than a predetermined time, the image clipper outputs information prompting the user to inspect the underfloor of the vehicle.

5. An image pickup system (1000D) comprising:
an imaging unit (200) provided to a gate unit (100);
a gate descent detector (110) configured to detect descent of the gate unit;
an image clipper (300) configured to clip a part of an image captured by the imaging unit;
a gate operating unit (120) configured to operate the descent of the gate unit;
**characterized in that** in a case where the gate operating unit descends the gate unit and the gate descent detector detects the descent of the gate unit, the image clipper clips and outputs an image of an underfloor of a vehicle of a user from images captured by the imaging unit.

6. An image pickup system (1000E) comprising:
an imaging unit (200) provided to a gate unit (100);
an inspection image determining unit configured to determine an image suitable to inspect an underfloor of a vehicle of a user from images captured by the imaging unit;
an image clipper (300) configured to clip a part of an image captured by the imaging unit;
a gate operating unit (120) configured to operate descent of the gate unit,
**characterized in that** in a case where the inspection image determining unit determines the image suitable to inspect the underfloor of the vehicle, the image clipper clips and outputs the image of the underfloor of the vehicle.

7. The image pickup system according to claim 2 or 6, **characterized in that** the image suitable to inspect the underfloor is an image that includes a front bumper portion of the vehicle.

8. The image pickup system according to claim 2 or 6, **characterized in that** the image suitable to inspect the underfloor is an image having an angle of view that enables a grounded surface of a front wheel of the vehicle and an underfloor portion at a rear of the front wheel to be imaged.

9. The image pickup system according to claim 5 or 6, **characterized in that** the gate operating unit notifies the image clipper of the descent of the gate unit,
wherein in a case where the gate operating unit detects the descent of the gate unit, the image clipper clips and outputs an image of a descent destination of the gate portion from the image captured by the imaging unit.

10. The image pickup system according to claim 5 or 6, further comprising a recognition unit (350) configured to recognize an obstacle based on the image captured by the imaging unit,
**characterized in that** the recognition unit outputs information about the obstacle superimposed on the image of the underfloor of the vehicle.

11. The image pickup system according to claim 10, **characterized in that** the recognition unit recognizes the obstacle based on an image of a descent destination of the gate unit clipped by the image clipper, and outputs the information about the obstacle superimposed on the image of the descent destination of the gate unit.

12. The image pickup system according to claim 3 or 10, **characterized in that** in a case where the recognition unit recognizes a wheel stopper as the obstacle in the image of the underfloor of the vehicle clipped by the image clipper, the recognition unit outputs information about the wheel stop superimposed on the image clipped by the image clipper.

13. The image pickup system according to any one of claims 1 to 12, **characterized in that** the imaging unit images a rear of the vehicle in a case where the gate descent detector does not detect the descent of the gate unit, and the imaging unit images the underfloor of the vehicle in a case where the gate descent detector detects the descent of the gate unit.

14. The image pickup system according to any one of claims 1 to 13, **characterized in that** an imaging direction of the imaging unit changes according to a descending operation of the gate unit.

15. A vehicle comprising:
a gate unit (100); and
the image pickup system (1000A, 1000B, 1000C, 1000D, 1000E) according to any one of claims 1 to 14.

16. A method of controlling an image pickup system configured to image a rear of a vehicle of a user and an underfloor of the vehicle using an imaging unit (200) provided to a gate unit (100), the method comprising the steps of:
determining whether or not descent of the gate unit is detected;
clipping and storing in a memory (310) a part of an image of the underfloor of the vehicle captured by the imaging unit in a case where it is determined that the descent of the gate unit has been detected;
determining whether driving start is detected; and
outputting the image of the underfloor of the vehicle stored in the memory in a case where it is determined that the driving start has been detected.

17. A method of controlling an image pickup system configured to image a rear of a vehicle of a user and an underfloor of the vehicle using an imaging unit (200) provided to a gate unit (100), the method comprising the steps of:
determining whether an image suitable to inspect the underfloor of the vehicle has been determined from images captured by the imaging unit;
clipping a part of the image of the underfloor of the vehicle captured by the imaging unit and storing the image of the underfloor in a memory in a case where it is determined that the image suitable to inspect the underfloor of the vehicle has been determined;
determining whether driving start is detected; and
outputting the image of the underfloor of the vehicle stored in the storage unit in a case where it is determined that the driving start has been detected.

18. A method of controlling an image pickup system configured to image a rear of a vehicle of a user and an underfloor of the vehicle using an imaging unit (200) provided to a gate unit (100), the method comprising the steps of:
detecting that the gate unit has been descended by a gate operating unit (120); and
clipping a part of an image of the underfloor of the vehicle from an image captured by the imaging unit in a case where it is determined that descent of the gate unit has been detected.

19. A method of controlling an image pickup system configured to image a rear of a vehicle of a user and an underfloor of the vehicle using an imaging unit (200) provided to a gate unit (100), the method comprising the steps of:
determining an image suitable to inspect the underfloor of the vehicle from images captured by the imaging unit; and
clipping and outputting an image of the underfloor of the vehicle in a case where the image suitable to inspect the underfloor of the vehicle is determined.

20. A program that causes a computer to execute the control method according to claim 16 to 19.
